# EUROPÄISCHE PATENTANMELDUNG

(11) **EP 1 061 717 A1**
(43) Veröffentlichungstag der Anmeldung: **20.12.2000**
(21) Anmeldenummer: 00109401.0
(22) Anmeldetag: 03.05.2000
(51) Int. Cl.: H04M 1/57

(54) **Mobiltelefon**

(30) Priorität: 19.06.1999 DE 29911212 U
(71) Anmelder: Traute, Sigurd, 45138 Essen (DE)
(72) Erfinder: Traute, Sigurd, 45138 Essen (DE)
(74) Vertreter: Rohmann, Michael, Dr.

(57) **Zusammenfassung**

Mobiltelefon mit Empfangseinrichtüng zum Empfang eines Anrufsignals und mit Ausgabeeinrichtung zur Ausgabe einer akustischen Anrufsignalisierung. Die Ausgabeeinrichtung ist eine Sprachausgabeeinrichtung, welche Sprachausgabeeinrichtung durch den Empfang des Anrufsignals zur Ausgabe einer individuellen Sprachansage als akustische Anrufsignalisierung aktivierbar ist.

## Beschreibung

Mobiltelefon mit Empfangseinrichtung zum Empfang eines Anrufsignals und mit Ausgabeeinrichtung zur Ausgabe einer akustischen Anrufsignalisierung. - Mobiltelefone werden im allgemeinen Sprachgebrauch auch als Handy bezeichnet. Anrufsignal meint im Rahmen der Erfindung das Signal, das beim Anwählen eines bestimmten Mobiltelefons insbesondere in Form von elektromagnetischen Wellen zu diesem Mobiltelefon gesendet und von dem Mobiltelefon bzw. mit einer Empfangseinrichtung des Mobiltelefons empfangen wird. Anrufsignalisierung meint im Rahmen der Erfindung die akustische Signalisierung, die durch Empfang eines Anrufsignals ausgelöst wird und dem Benutzer bzw. Besitzer des betreffenden Mobiltelefons den Eingang eines Anrufes signalisiert.

Bei den aus der Praxis bekannten Mobiltelefonen der eingangs genannten Art wird eine akustische Anrufsignalisierung in Form von Tonfolgen oder Klingeltönen ausgegeben. Diese Töne haben in der Regel einen blechernen oder piepsenden Klang und werden von anderen Personen oftmals als störend empfunden. Manche Mobiltelefone bieten dem Benutzer bzw. Besitzer die Möglichkeit aus einer begrenzten Anzahl von abgespeicherten Tonfolgen eine gewünschte Tonfolge als Anrufsignalisierung auszuwählen. Dies ändert jedoch nichts an den vorstehend genannten Nachteilen. Auch wenn manche der Tonfolgen an Musikstücke erinnern, werden diese Anrufsignalisierungen nichtsdestoweniger von der Umwelt als unangenehm und störend empfunden. Heutzutage ist eine Vielzahl von Mobiltelefonen in Gebrauch und die Anrufsignalisierungen vieler Mobiltelefone ähneln sich. Insbesondere an Orten, an denen sich eine Vielzahl von Personen aufhalten, beispielsweise in Bahnhöfen, Flughäfen oder S-Bahnen ist beim Ertönen einer akustischen Anruf-signalisierung den einzelnen Benutzern die eindeutige Zuordnung oftmals nicht möglich. Dies führt häufig dazu, dass bei Ertönen einer akustischen Anrufsignalisierung eine Mehrzahl von Mobiltelefonbenutzern vergeblich zu ihren Mobiltelefonen greift. Vor allem wenn ein Mobiltelefon in der Tasche eines Kleidungsstückes oder in einem Koffer o. dgl. aufbewahrt wird, ist die eindeutige Identifizierung der Anrufsignalisierung oftmals schwierig.

Demgegenüber liegt der Erfindung das technische Problem zugrunde, ein Mobiltelefon der eingangs genannten Art anzugeben, bei dem die vorstehend geschilderten Nachteile vermieden werden.

Zur Lösung dieses technischen Problems lehrt die Erfindung ein Mobiltelefon der eingangs genannten Art, welches dadurch gekennzeichnet ist, dass die Ausgabeeinrichtung eine Sprachausgabeeinrichtung ist, welche Sprachausgabeeinrichtung durch den Empfang des Anrufsignals zur Ausgabe einer individuellen Sprachansage als akustische Anruf-signalisierung aktivierbar ist. - Sprachansage meint im Rahmen der Erfindung die Ausgabe menschlicher Sprache in Form von zumindest eines gesprochenen Wortes, vorzugsweise in Form von einer Folge von gesprochenen Worten. Es liegt im Rahmen der Erfindung, dass sich die Sprachansage in Form des zumindest einen Wortes oder in Form der Folge der Wörter während der Dauer der Anrufsignalisierung bzw. bis der Benutzer das Mobiltelefon einschaltet, wiederholt. Es liegt aber auch im Rahmen der Erfindung, dass während der Anrufsignalisierung eine lange Reihe jeweils unterschiedlich gesprochener Wörter ausgegeben wird. Jedenfalls ist erfindungsgemäß die Sprachansage zweckmäßigerweise so eingerichtet, dass sie dem Benutzer bzw. Besitzer des Mobiltelefons eine eindeutige Zuordnung der Anrufsignalisierung zu seinem Mobiltelefon ermöglicht. Nach einer bevorzugten Ausführungsform der Erfindung wird die Sprachansage in Form eines gesprochenen Namens verwirklicht, wobei es sich um den tatsächlichen Namen des Mobiltelefonbenutzers handeln kann. Es versteht sich, dass hierdurch eine zweifelsfreie Zuordnung möglich ist. Die Sprachausgabe kann auch beispielsweise in Form von gesprochenen Nummern oder in Form von gesprochenen Fantasiebegriffen realisiert werden. Insoweit gibt es eine Vielzahl von Möglichkeiten, wobei im Rahmen der Erfindung zweckmäßigerweise die Sprachansage stets so eingerichtet ist, dass der Mobiltelefonbenutzer auf Anhieb die Anruf-signalisierung seines Mobiltelefons erkennt.

Es liegt im Rahmen der Erfindung, dass die Sprachausgabeeinrichtung in dem Mobiltelefon integriert ist und zweckmäßigerweise so miniaturisiert ist, dass ein erfindungsgemäßes Mobiltelefon sich bezüglich seiner Größe und/oder Form nicht oder zumindest kaum von den gebräuchlichen Mobiltelefonen unterscheidet. Nach bevorzugter Ausführungsform der Erfindung besteht die Sprachausgabeeinrichtung aus einem Sprachchip und einem daran angeschlossenen Lautsprecher für die Sprachansage. Derartige Sprachchips sind in verschiedenen Ausführungsformen bekannt. Der Sprachchip kann modifiziert werden, so dass variable Sprachansagen möglich sind. - Es liegt im Rahmen der Erfindung, dass eine Speichereinrichtung zur Speicherung eines individuellen Sprachcodes vorgesehen ist.

Nach sehr bevorzugter Ausführungsform, der im Rahmen der Erfindung ganz besondere Bedeutung zukommt, ist das erfindungsgemäße Mobiltelefon so ausgelegt, dass der Besitzer bzw. Benutzer die gewünschte Sprachansage selbst erzeugen bzw. aufnehmen kann. Es liegt dabei im Rahmen der Erfindung, dass der Besitzer bzw. Benutzer seine eigene Sprache bzw. von ihm gesprochene Wörter aufnehmen kann. Zweckmäßigerweise findet eine Digitalisierung und Komprimierung der Sprache statt und die individuellen Sprachcodes werden in einer Speichereinrichtung des Mobiltelefons abgespeichert. Eine sehr bevorzugte Ausführungsform ist dadurch gekennzeichnet, dass in dem Mobiltelefon eine Sprachaufnahmeeinrichtung vorgesehen ist, mit welcher Sprachaufnahmeeinrichtung eine individuelle Sprachfolge von dem Benutzer aufnehmbar ist. Sprachfolge meint zumindest ein gesprochenes Wort oder eine Folge von gesprochenen Wörtern. Zweckmäßigerweise ist die in dem Mobiltelefon integrierte Sprachaufnahmeeinrichtung entsprechend miniaturisiert, so dass das erfindungsgemäße Mobiltelefon sich bezüglich seiner Größe und/oder Form nicht oder zumindest kaum von üblichen Mobiltelefonen unterscheidet. Bevorzugt wird ein in dem Mobiltelefon ohnehin vorhandenes Mikrofon zur Aufnahme der Sprachfolge eingesetzt, welches Mikrofon an die Sprachaufnahmeeinrichtung angeschlossen ist. Es liegt dabei im Rahmen der Erfindung, dass eine entsprechende Digitalisierung und Komprimierung der Sprachfolge stattfindet und als Sprachcode in einer Speichereinrichtung des Mobiltelefons abspeicherbar ist. Die vorstehend erläuterte Ausführungsform des erfindungsgemäßen Mobiltelefons zeichnet sich durch den beachtlichen Vorteil aus, dass der Besitzer bzw. Benutzer unendliche Möglichkeiten zur Auswahl einer individuellen Sprachansage hat, welche Sprachansage dann als akustische Anrufsignalisierung des Mobiltelefons ausgegeben wird.

Eine weitere bevorzugte Ausführungsform der Erfindung ist dadurch gekennzeichnet, dass an dem erfindungsgemäßen Mobiltelefon eine Schnittstelle für den Anschluss an einen Rechner vorgesehen ist, über welche Schnittstelle ein digitalisierter Sprachcode auf das Mobiltelefon überspielbar ist und im Mobiltelefon abspeicherbar ist. Insoweit liegt es im Rahmen der Erfindung, dass an sich bekannte und an einen handelsüblichen Rechner bzw. Computer anschließbare Sprachaufnahmeeinrichtungen zur Aufnahme der vom Benutzer ausgewählten Sprachfolge eingesetzt werden. Vorzugsweise wird die Sprachfolge in dem Rechner digitalisiert und dann besteht die Möglichkeit, den digitalisierten Sprachcode über die erfindungsgemäße Schnittstelle dem Mobiltelefon zuzuführen. Die Schnittstelle des Mobiltelefons ist zweckmäßigerweise mittels eines Kabels an den Rechner anschließbar. Es liegt im Rahmen der Erfindung, dass der Sprachcode in einer Speichereinrichtung des Mobiltelefons abspeicherbar ist.

Im Zusammenhang mit der vorstehend erläuterten Ausführungsform ist es auch möglich, dass der Mobilfunkbetreiber beispielsweise in seinen Service-Centern den Mobiltelefonbesitzers bzw. -benutzern die Möglichkeit bietet, dort die gewünschte Sprachfolge aufzunehmen. Die Sprachfolge wird dann von dem Mobilfunkbetreiber in ein geeignetes Audioformat digitalisiert und komprimiert. Über eine erfindungsgemäße Schnittstelle des Mobiltelefons wird dann der Sprachcode dem Mobiltelefon zugeführt und in einer Speichereinrichtung des Mobiltelefons abgespeichert. Die Schnittstelle des Mobiltelefons wird dazu zweckmäßigerweise mit einem geeigneten Kabel an einem Rechner bzw. Computer des Mobilfunkbetreibers angeschlossen. - Grundsätzlich liegt es auch im Rahmen der Erfindung, dass der Benutzer mit seinem Mobiltelefon eine Hotline anrufen kann, die ihm verschiedene auswählbare Sprachfolgen zur Verfügung stellt, wobei dann eine ausgewählte Sprachfolge auf das Mobiltelefon überspielt werden kann und als Sprachansage eingesetzt wird.

Der Erfindung liegt die Erkenntnis zugrunde, das bei Verwirklichung der Lehre nach Patentanspruch 1 beim Ertönen einer akustischen Anrufsignalisierung dem jeweiligen Besitzer bzw. Benutzer eine zweifelsfreie Zuordnung zu seinem Mobiltelefon möglich ist. Die Erfindung bietet den beachtlichen Vorteil, dass gleichsam eine unendliche Vielzahl von individuellen Sprachansagen möglich ist. Insoweit sind Verwechslungen beim Ertönen einer erfindungsgemäßen akustischen Anrufsignalisierung so gut wie ausgeschlossen. Die erfindungsgemäße Sprachansage bietet im übrigen den wesentlichen weiteren Vorteil, dass diese Anrufsignalisierung von der Umwelt als viel weniger störend empfunden wird als die bisherigen Anrufsignalisierungen in Form von Tonfolgen oder Klingeltönen. Die erfindungsgemäße Sprachansage ähnelt vielmehr den Gesprächen, die an Orten, die von vielen Personen besucht werden, ohnehin stattfinden. Die akustische Anrufsignalisierung in Form der Sprachansage wird daher von anderen Personen gar nicht oder zumindest nicht als störend wahrgenommen. Die Erfindung bietet dem Besitzer bzw. Benutzer des Mobiltelefons auch die Möglichkeit, sehr originelle Sprachansagen auszuwählen bzw. aufzunehmen. Wenn die erfindungsgemäße Sprachansage den Namen des Besitzers oder Benutzers wiedergibt, kann außerdem zusätzlich auch ein Titel oder eine Berufsbezeichnung sprachlich ausgegeben werden. Das erfindungsgemäße Mobiltelefon kann somit auch als Statussymbol für manche Benutzer dienen.

## Patentansprüche

1. Mobiltelefon mit Empfangseinrichtung zum Empfang eines Anrufsignals und mit Ausgabeeinrichtung zur Ausgabe einer akustischen Anrufsignalisierung, dadurch gekennzeichnet, dass die Ausgabeeinrichtung eine Sprachausgabeeinrichtung ist, welche Sprachausgabeeinrichtung durch den Empfang des Anrufsignals zur Ausgabe einer individuellen Sprachansage als akustische Anrufsignalisierung aktivierbar ist.

2. Mobiltelefon nach Anspruch 1, dadurch gekennzeichnet, dass die Sprachausgabeeinrichtung aus einem Sprachchip und einem daran angeschlossenen Lautsprecher für die Sprachansage besteht.

3. Mobiltelefon nach einem der Ansprüche 1 oder 2, dadurch gekennzeichnet, dass eine Speichereinrichtung zur Speicherung eines individuellen Sprachcodes vorgesehen ist.

4. Mobiltelefon nach einem der Ansprüche 1 bis 3, dadurch gekennzeichnet, dass eine Sprachaufnahmeeinrichtung vorgesehen ist, mit welcher Sprachaufnahmeeinrichtung eine individuelle Sprachfolge von dem Benutzer aufnehmbar ist.

5. Mobiltelefon nach einem der Ansprüche 1 bis 4, dadurch gekennzeichnet, dass eine Schnittstelle für den Anschluss an einen Rechner vorgesehen ist, über welche Schnittstelle ein digitalisierter Sprachcode auf das Mobiltelefon überspielbar ist und im Mobiltelefon abspeicherbar ist.
